(19) **Europäisches Patentamt / European Patent Office / Office européen des brevets**

(11) **EP 2 771 626 B1**

(12) **FASCICULE DE BREVET EUROPEEN**

(45) Date de publication et mention
de la délivrance du brevet:
**18.05.2016 Bulletin 2016/20**

(21) Numéro de dépôt: **12781457.2**

(22) Date de dépôt: **24.09.2012**

(51) Int Cl.:
*F25B 9/14* (2006.01)     *G05D 23/19* (2006.01)

(86) Numéro de dépôt international:
**PCT/IB2012/055068**

(87) Numéro de publication internationale:
**WO 2013/061178 (02.05.2013 Gazette 2013/18)**

(54) **PROCEDE DE REGULATION DE LA TEMPERATURE D'UN ELEMENT REFROIDI PAR UN CRYOREFRIGERATEUR A FONCTIONNEMENT PERIODIQUE, DISPOSITIF DE MISE EN OEUVRE ASSOCIE ET INSTALLATION CRYOGENIQUE COMPRENANT CE DISPOSITIF.**

VERFAHREN ZUR REGELUNG DER TEMPERATUR EINES DURCH EINEN KRYOGEFRIERER MIT PERIODISCHEM BETRIEB GEKÜHLTEN ELEMENTS, ZUGEHÖRIGE IMPLEMENTIERUNGSVORRICHTUNG UND KRYOGENE ANLAGE MIT DIESER VORRICHTUNG

METHOD OF REGULATING THE TEMPERATURE OF AN ELEMENT COOLED BY A CRYOREFRIGERATOR WITH PERIODIC OPERATION, ASSOCIATED IMPLEMENTATION DEVICE AND CRYOGENIC INSTALLATION COMPRISING THIS DEVICE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **28.10.2011 FR 1159857**

(43) Date de publication de la demande:
**03.09.2014 Bulletin 2014/36**

(73) Titulaire: **Commissariat à l'Énergie Atomique et aux Énergies Alternatives**
**75015 Paris (FR)**

(72) Inventeurs:
• **BONNAY, Patrick**
  **38500 Voiron (FR)**
• **ERHART, Sébastian**
  **63225 Langen (DE)**
• **CARRE, Pascal**
  **69200 Venissieux (FR)**

(74) Mandataire: **Gevers & Orès**
**36 rue de Saint-Pétersbourg**
**75008 Paris (FR)**

(56) Documents cités:
WO-A1-2011/089768    JP-A- 2004 076 955
US-A- 5 857 342    US-A1- 2007 068 175

• HE D F ET AL: "High-Tc DC SQUID system cooled by pulse-tube cooler", PHYSICA C, NORTH-HOLLAND PUBLISHING, AMSTERDAM, NL, vol. 392-396, 1 octobre 2003 (2003-10-01), pages 1416-1419, XP004455120, ISSN: 0921-4534, DOI: 10.1016/S0921-4534(03)01061-X
• GROHMANN S ET AL: "Development of a miniature cryogenic fluid circuit and a cryogenic micropump", CRYOGENICS, ELSEVIER, KIDLINGTON, GB, vol. 45, no. 6, 1 juin 2005 (2005-06-01), pages 432-438, XP027651099, ISSN: 0011-2275 [extrait le 2005-06-01]

EP 2 771 626 B1

**EP 2 771 626 B1**

**Description**

La présente invention se rapporte au domaine de la réfrigération d'un élément, en particulier à la réfrigération cryogénique de cet élément.

La présente invention se rapporte plus particulièrement à la réfrigération cryogénique d'un élément au moyen d'un cryoréfrigérateur à fonctionnement périodique.

Parmi les cryoréfrigérateurs à fonctionnement périodique connus, on peut citer les tubes à gaz pulsé ou les machines de Gifford-MacMahon.

Le refroidissement avec un cryoréfrigérateur à fonctionnement périodique est généralement employé pour refroidir à très basse température, typiquement entre 4K et 120K, des installations pour lesquelles les contraintes d'exploitation sont fortes ou pour lesquelles il n'est pas possible d'effectuer une distribution d'hélium liquide.

De telles contraintes peuvent être rencontrées dans des applications nucléaires pour lesquelles l'élément à refroidir est disposé dans un milieu radioactif confiné. Dans ce cas, l'utilisation d'un réservoir d'hélium situé à l'extérieur du bâtiment nucléaire est en effet très contraignante, puisqu'il faut transférer l'hélium à l'intérieur du bâtiment, ce qui implique des pertes thermiques importantes. Par ailleurs, la récupération de l'hélium gazeux en sortie peut obliger à prendre des mesures de précautions particulièrement contraignantes.

Ces contraintes peuvent également être rencontrées pour des applications spatiales, par exemple pour le refroidissement de certains composants d'un satellite.

Un avantage du cryoréfrigérateur à fonctionnement périodique est qu'il fournit du froid sans avoir besoin d'apport d'hélium liquide extérieur par l'intermédiaire d'un réservoir de stockage d'hélium liquide.

Cependant, un cryoréfrigérateur à fonctionnement périodique engendre des variations de température dans le temps qui se propagent dans l'installation et par suite, dans l'élément dont on cherche généralement à maintenir la température. Les variations de température subies par l'élément sont atténuées le long de la chaîne de refroidissement de l'installation, mais elles perturbent toujours le fonctionnement de cet élément.

WO 2011089768 A1 divulgue un procédé de regulation de la temperature d'un element refroidi par un cryoréfrigerateur.

Les documents US 5 857 342, JP 2004 076955 et l'article de HE D. F. et al. "High-Tc DC SQUID system cooled by pulse-tube cooler" Physica C, North Holland Publishing, Amsterdam, NL, vol. 392-396, 1er Octobre 2003, pp. 1416-1419 s'intéressent aux cryo-refrigérateurs à fonctionnement périodique.

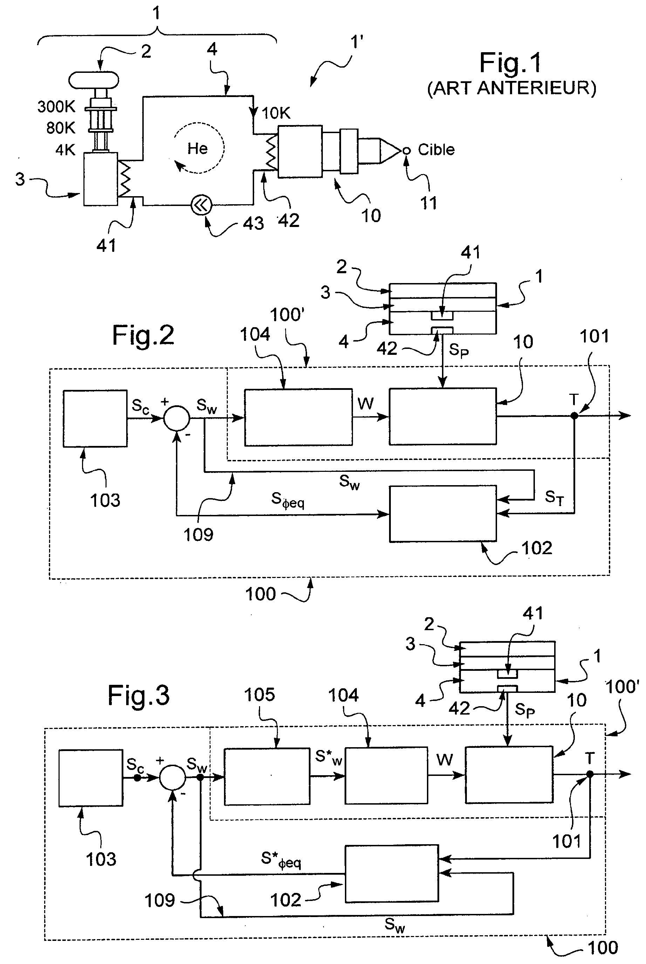

Un exemple d'application de refroidissement d'un élément par un cryoréfrigérateur à fonctionnement périodique est représenté sur la figure 1.

La figure 1 est un schéma représentant une installation cryogénique 1' comportant un dispositif de refroidissement 1 pour un élément 10 à refroidir, par exemple la pince cryogénique 10 d'un système permettant d'obtenir une fusion nucléaire inertielle avec un laser de forte puissance, tel que le laser « MégaJoule ».

La pince cryogénique 10 forme l'élément dont on cherche à réguler la température.

Le dispositif de refroidissement 1 comprend un tube 2 à gaz pulsé, un stabilisateur 3 pour atténuer les variations de température du tube 2 à gaz pulsé et un circuit de refroidissement 4 à l'hélium gazeux.

Le circuit de refroidissement 4 comprend un premier échangeur thermique 41 avec le stabilisateur 3, un deuxième échangeur thermique 42 avec la pince 10 et un moyen 43 pour faire circuler l'hélium gazeux dans le circuit de refroidissement 4.

L'extrémité de la pince cryogénique 10 supporte une cible 11 pour le faisceau laser.

La réussite des expériences de fusion avec le laser sur la cible 11 dépend fortement de la stabilité thermique de cette cible 11.

A ce jour, le dispositif de refroidissement 1 permet d'atteindre une variation de température de l'ordre de 10mK au niveau de la cible 11, cette cible 11 présentant une température généralement comprise entre 18K et 23K.

La variation relative de la température de la cible 11 apparaît relativement faible, mais elle est encore gênante pour la réussite de certaines expériences de fusion avec ce laser.

L'exigence de stabilité de la température au niveau de l'installation à refroidir avec un cryoréfrigérateur à fonctionnement périodique intéresse également d'autres applications, notamment dans le domaine spatial.

En effet, selon le type de cryoréfrigérateur à fonctionnement périodique utilisé, il a été mesuré que l'amplitude de la variation de température au niveau du bout froid du cryoréfrigérateur pouvait être comprise entre 300mK et 2200mK qui sont difficiles à atténuer malgré la présence d'un stabilisateur au sein du dispositif de refroidissement.

Un objectif de l'invention est donc de proposer un procédé de régulation de la température d'une installation refroidie par un cryoréfrigérateur à fonctionnement périodique permettant de diminuer, par rapport aux techniques existantes, les variations de température de cette installation.

Un objectif de l'invention est également de proposer un dispositif pour mettre en oeuvre ce procédé.

Un autre objectif de l'invention est de proposer une installation cryogénique comportant ce dispositif.

Dans le cas particulier d'un laser de forte puissance pour l'étude de la fusion nucléaire inertielle, l'invention

2

vise notamment à obtenir des variations de température de l'ordre du mK au niveau de la cible.

Pour atteindre l'un au moins de ces objectifs, l'invention propose un procédé de régulation de la température d'un élément refroidi par un cryoréfrigérateur à fonctionnement périodique, caractérisé en ce qu'il comprend les étapes suivantes :

(a) mesurer au moins l'évolution temporelle périodique de la température T de l'élément (10), cette évolution permettant d'obtenir un signal de température représentatif du fonctionnement périodique du cryoréfrigérateur (2) ;
(b) construire un signal de flux thermique périodique dit équivalent, en fonction du signal de température obtenu à l'étape (a) ;
(c) construire un signal de commande de flux thermique, dépendant du signal de flux thermique équivalent construit à l'étape (b), ledit signal de commande de flux thermique servant également, par retour, à la construction du signal de flux thermique équivalent lors de l'étape (b);
(d) injecter un flux thermique dans l'élément (10), sur la base du signal de flux thermique construit à l'étape (c), pour compenser les variations périodiques mesurées de la température T de l'élément.

Le procédé selon l'invention pourra comprendre les étapes suivantes, prises seules ou en combinaison :

- le signal de commande de flux thermique dépend également d'un signal de commande pour améliorer la compensation des variations périodiques de la température de l'élément aux basses fréquences ;
- le flux thermique injecté dans l'élément à l'étape (c) dépend de la différence entre le signal de commande et le signal de flux thermique équivalent construit à l'étape (b), pour limiter la puissance thermique injectée dans l'élément qui est nécessaire à la compensation des variations périodiques de sa température ;
- l'étape (b) comprend également une étape additionnelle consistant à retarder le signal de flux thermique équivalent ($S_{\Phi eq}$) préalablement construit, par rapport à la phase du signal de température déterminé à l'étape (a) ;
- il est prévu une étape consistant à estimer la valeur de ce retard temporel ;
- l'estimation de ce retard temporel comprend les étapes suivantes :

($b_1$) injecter un signal d'identification du retard temporel dans un système thermique comprenant l'élément dont on cherche à réguler la température et un dispositif de mise en oeuvre du procédé, ce signal d'identification présentant une forme et une fréquence proches du signal représentatif du fonctionnement du cryoréfrigérateur;
($b_2$) déterminer le déphasage $\phi$ du signal d'identification en sortie du système thermique, ce déphasage étant associé au retard temporel qu'on cherche à estimer ;
($b_3$) calculer le déphasage $\phi_0$ de ce signal d'identification avec un modèle représentant le comportement thermique du système thermique en l'absence de tout retard;
($b_4$) calculer le déphasage $\varphi_r$ associé au retard temporel par la relation $\varphi_r = \phi - \phi_0$;
($b_5$) estimer le retard temporel, au moins à partir du déphasage $\varphi_r$ calculé à l'étape ($b_4$) et de la fréquence du signal d'identification, ledit retard étant utilisé pour retarder le signal de flux thermique équivalent.

Pour atteindre cet objectif, l'invention propose également un dispositif de mise en oeuvre du procédé de régulation de la température d'un élément refroidi par un cryoréfrigérateur à fonctionnement périodique selon l'une des revendications précédentes, caractérisé en ce qu'il comprend :

- au moins un moyen pour mesurer l'évolution périodique de la température T de l'élément liée au fonctionnement périodique du cryoréfrigérateur;
- au moins un moyen pour déterminer le flux thermique équivalent associé à cette variation périodique de la température T de l'élément, ce moyen ou cet ensemble de moyens comprenant un ordinateur ou un ensemble d'ordinateurs ou un processeur ou un ensemble de processeurs;
- au moins un moyen pour injecter un flux thermique dans l'élément, à partir d'un signal de commande de flux thermique dépendant du signal de flux thermique équivalent ;
- un moyen pour injecter le signal de commande de flux thermique au niveau de l'entrée dudit au moins un moyen pour déterminer le flux thermique équivalent.

Le dispositif selon l'invention pourra comprendre l'une au moins des caractéristiques suivantes, prises seules ou en combinaison :

- il est prévu un moyen capable de délivrer un signal de commande pour améliorer la compensation des variations périodiques de la température de l'élément aux basses fréquences ;
- le moyen pour injecter un flux thermique dans l'élément comprend un générateur de champ magnétique variable associé à un bain thermique isotherme, pour aimanter ou désaimanter adiabatiquement un dispositif raccordé à l'élément ;
- ledit au moins un moyen pour déterminer l'évolution périodique de la température de l'élément et ledit au moins un moyen pour injecter un flux thermique dans l'élément sont disposés l'un à côté de l'autre.

Enfin, l'invention propose également une installation cryogénique pour refroidir un élément avec un cryoréfrigérateur à fonctionnement périodique, ladite installation comprenant un stabilisateur relié au cryoréfrigérateur et un circuit de refroidissement comprenant un premier échangeur thermique relié au stabilisateur et un deuxième échangeur thermique relié à l'élément, caractérisé en ce qu'il comprend, en outre, un dispositif selon l'invention.

Les caractéristiques, buts et avantages de l'invention seront énoncés dans la description détaillée ci-après faite en référence aux figures suivantes :

- la figure 2 est un schéma représentant un mode de réalisation du procédé mis en oeuvre dans le cadre de l'invention;
- la figure 3 est un schéma d'un mode de réalisation d'une version améliorée du procédé représenté sur la figure 2, cette version prenant notamment en compte le comportement dynamique de type retard pur, connu, des différents éléments constitutifs du dispositif de mise en oeuvre de l'invention;
- la figure 4 est un schéma précisant comment est déterminé un signal de flux thermique, associé à l'évolution périodique de température de l'élément dont on cherche à réguler la température, dans le cadre du procédé mis en oeuvre sur la figure 3 ;
- la figure 5 est un schéma d'un mode de réalisation d'une version améliorée du procédé représenté sur la figure 2, cette version prenant notamment en compte le comportement dynamique de type retard pur, qui n'est pas connu mais estimé, des différents éléments constitutifs du dispositif de mise en oeuvre de l'invention;
- la figure 6 est un schéma représentant le fonctionnement d'un filtre non-linéaire susceptible d'être mis en oeuvre dans l'estimation effectuée dans le cadre du procédé représenté sur la figure 5 ;
- la figure 7 représente une pince cryogénique selon une vue en perspective ;
- la figure 8 est une représentation schématique de la pince de la figure 7 sur laquelle sont précisés l'implantation de différents capteurs de température et de différents actionneurs ;
- la figure 9 est un schéma électrique équivalent au schéma pouvant être qualifié de thermique de la figure 8 ;
- la figure 10 est un schéma représentant l'évolution de la température de l'élément dont on cherche à réguler la température, en l'occurrence la pince cryogénique du laser « MégaJoule », en fonction du temps, avec un filtre utilisé dans les procédés schématisés sur les figures 3 et 4 ;
- la figure 11 est un schéma représentant l'atténuation de la perturbation de la température de l'élément dont on cherche à réguler la température, en l'occurrence la pince cryogénique du laser « MégaJoule », en fonction du retard généré par différents éléments constitutifs du dispositif de mise en oeuvre des procédés schématisés sur les figures 2 et 3 :
- la figure 12 est un schéma d'un dispositif réel servant d'installation expérimentale test pour valider l'intérêt de l'invention ;
- la figure 13 est un schéma électrique équivalent à l'installation expérimentale représentée sur la figure 12 ;
- la figure 14 fournit l'évolution de la température de l'élément dont on cherche à réguler la température appartenant à l'installation expérimentale de la figure 12.

Sur la figure 2, on a représenté le principe général du procédé selon l'invention, ainsi que des moyens du dispositif de mise en oeuvre de ce procédé.

Il s'agit d'un procédé de régulation de la température T d'un élément 10 refroidi par un cryoréfrigérateur à fonctionnement périodique.

Le procédé comprend les étapes suivantes :

(a) mesurer au moins l'évolution temporelle périodique de la température T de l'élément, cette évolution permettant d'obtenir un signal de température représentatif du fonctionnement périodique du cryoréfrigérateur ;
(b) construire un signal de flux thermique périodique dit équivalent, en fonction du signal de température obtenu à l'étape (a) ;
(c) construire un signal de commande de flux thermique, dépendant du signal de flux thermique équivalent construit à l'étape (b), ledit signal de commande de flux thermique servant également, par retour, à la construction du signal de flux thermique équivalent lors de l'étape (b);
(d) injecter un flux thermique dans l'élément, sur la base du signal de flux thermique construit à l'étape (c), pour compenser les variations périodiques mesurées de la température T de l'élément.

Le procédé selon l'invention permet ainsi de compenser les effets perturbateurs constatés au niveau de l'élément 10 (variation de température non souhaitée), en raison du fonctionnement périodique du cryoréfrigérateur.

Ce procédé est destiné à s'appliquer à un système thermique 100' comprenant ledit élément 10 dont on cherche à réguler la température et l'actionneur 104. La boucle de régulation de la température de cet élément 10 est quant à elle associée à un dispositif 100, ce dernier étant destiné à fournir le signal de commande $S_W$ de flux thermique à l'actionneur 104.

Par exemple, l'élément 10 peut être formé par la pince d'un laser de forte puissance destiné à l'étude de la fusion nucléaire inertielle, tel que le laser « MégaJoule ». Cette pince cryogénique est en l'occurrence un assemblage de plusieurs pièces à refroidir.

La mesure de la température T de l'élément à l'étape (a) peut être effectuée par un capteur de température 101 appartenant au système thermique 100'.

Le capteur de température 101 utilisé peut être un capteur résistif. La température est obtenue par calcul à partir de la mesure de la résistance et de la loi en température du capteur 101.

Les performances demandées à ce capteur de température 101 sont principalement une grande stabilité, i.e. une faible dérive, et un niveau de bruit aussi faible que possible.

En d'autres termes, la reproductibilité de la mesure fournie par le capteur de température est importante.

En revanche, la précision de la mesure fournie par ce capteur, c'est-à-dire la différence entre la température réelle et la température mesurée par le capteur 101 est d'importance moindre dans la mesure où il est toujours possible d'effectuer un recalage sur un point fixe, avec des moyens de traitement adaptés connus de l'homme du métier. A cet effet, il est possible d'effectuer un étalonnage du capteur 101 avec un capteur de référence étalonné par un organisme agréé. En variante, il est possible d'étalonner le capteur 101 en visualisant un changement de phase : passage liquide /solide (point triple) à l'aide d'un système fonctionnant par technique ombroscopique.

Avec un capteur de température 101 de type résistif réalisé en germanium, on peut alors considérer les caractéristiques suivantes $\Delta R = 0{,}3m\Omega$ pour $R_N = 20\Omega$ où $R_N$ est la résistance du capteur à la température nominale $T_N$ et $\Delta R$, la variation de cette résistance autour de la température $T_N$. Selon un autre exemple, avec un capteur de température 101 résistif de type CERNOX™, on a environ $\Delta R = 5m\Omega$ pour $R_N = 1000\Omega$. Le niveau des signaux mesurés ne dépasse pas 3mV à 4mV avec une bande passante de quelques Hertz.

La température mesurée par le capteur 101 constitue alors un signal $S_T$ qui est transmis à un moyen 102; appartenant au dispositif 100 (boucle de régulation), permettant de construire le signal de flux thermique équivalent $S_{\Phi eq}$. Ce signal de flux thermique $S_{\Phi eq}$ est l'équivalent en termes de flux de chaleur, de la température T mesurée par le capteur.

Le moyen 102 est en fait un moyen de calcul, tel qu'un ordinateur, un ensemble d'ordinateurs, un processeur ou un ensemble de processeurs, permettant de mettre en oeuvre un modèle thermique représentatif du comportement du système thermique 100' comprenant l'élément 10.

L'étape (b) ainsi mise en oeuvre par le moyen 102 permet donc de produire une information associée à la variation de température de l'élément 10 sous la forme d'un flux thermique équivalent. A cet effet, l'étape (b) intègre également le retour du signal $S_W$ au niveau de l'entrée du moyen 102 pour avoir une information sur le flux thermique à injecter; cf. figures 2 à 4 par exemple.

Cette information peut alors être prise en compte par un actionneur 104 permettant d'injecter effectivement un flux thermique W dans l'élément 10 pour compenser les variations de température de l'élément 10.

Ce flux thermique équivalent est reconstruit par le biais de l'équation (#11) du modèle qui est ultérieurement à l'appui des relations (#1) à (#11).

Un modèle thermique susceptible d'être employé afin d'évaluer le flux thermique équivalent à une variation périodique de la température T de l'élément 10 est décrit ci-après, dans le cas où cet élément est constitué par la pince cryogénique 10 d'un laser à forte puissance pour l'étude de la fusion inertielle.

Pour cela, on modélise le comportement thermique du système thermique 100' comportant la pince 10, l'actionneur 104 et le capteur de température 101.

Cette modélisation thermique s'effectue sous la forme d'une représentation d'état discrète. Dans le domaine de l'automatique, une représentation d'état permet de modéliser un système dynamique sous une forme matricielle en utilisant des variables d'état. Cette représentation d'état doit alors rendre compte de l'état du système à n'importe quel instant futur si l'on possède les valeurs initiales. En l'occurrence, cette représentation est discrète pour son implémentation dans un moyen de calcul, tel qu'un processeur ou un ordinateur.

Cette représentation d'état discrète s'écrit sous la forme (#1) :

$$x(k+1) = A.x(k) + B.U(k)$$

$$T(k) = C.x(k) \qquad\qquad \textbf{(\#1)}$$

où :

T représente la température de la pince cryogénique 10 qu'on cherche à réguler,
U est un vecteur associé au flux thermique reçu par la pince cryogénique 10, x est le vecteur d'état du système thermique 100',
k est un incrément de temps discret ; et
A, B et C sont des matrices à déterminer.

Le vecteur d'état x du système thermique 100' est un ensemble minimal de variables d'état, c'est-à-dire de grandeurs temporelles, nécessaires et suffisantes pour déterminer l'évolution du système thermique 100' quand on connaît les équations qui décrivent le fonctionnement de ce système thermique 100' et les entrées de ce système 100'.

Par la suite, le vecteur x pourra être un vecteur colonne comportant n variables $x_1$, $x_2$,...$x_n$ où n, le nombre de composantes du vecteur $x_x$ correspond au degré de complexité du modèle thermique. Le nombre n définit ainsi le degré de complexité du modèle thermique modélisant le système thermique 100'.

Dans ce cas, la matrice A est une matrice carrée de type $n_x$*$n_x$ où $n_x$ définit la taille du vecteur d'état x du système thermique 100'.

La matrice B est une matrice de type $n_x$*$n_u$ où $n_u$ est la taille du vecteur U. Par exemple, si l'on considère uniquement un actionneur 104 dans le modèle thermique, alors $n_u$ = 1. C'est par exemple ce qui a été considéré dans l'essai réalisé sur la pince du laser MégaJoule, dans le chapitre « résultat d'un essai » présenté ultérieurement. Selon un autre exemple, on peut prendre en considération d'autres sources de flux de chaleur, par exemple en ajoutant celle qui provient de l'échangeur de la pince. C'est ce qui est effectué dans le chapitre « exemple d'application » présenté ci-après.

La matrice C est une matrice ligne de type 1*$n_x$. Il s'agit d'une matrice ligne dans la mesure où l'on cherche à réguler une seule température, en l'occurrence la température T de la pince cryogénique 10.

Pour le refroidissement de la pince cryogénique 10 de ce type de laser, le cryoréfrigérateur 2 peut être un tube à gaz pulsé dont le fonctionnement périodique peut être représenté par une fonction de forme sinusoïdale.

En conséquence, la perturbation en température liée au fonctionnement du tube à gaz pulsé arrivant en entrée de la pince cryogénique 10 a également une forme sinusoïdale. Le signal de flux de chaleur $S_P$ qui induit cette perturbation en température de la pince 10 est donc le signal que le dispositif 102 vise à reconstruire. Autrement dit, le flux de chaleur équivalent $S_{\Phi eq}$ provoque le même effet sur la température T de la pince 10 que le signal de flux de chaleur $S_P$ créé par le dispositif de refroidissement de la pince.

La représentation d'état discrète du signal sinusoïdal $S_P$ s'écrit alors sous la forme (#2) :

$$x_{sin}(k+1) = A_{sin} . x_{sin}(k)$$
$$S_P(k) = C_{sin} . x_{sin}(k) \qquad\qquad (\#2)$$

où :

$$A_{sin} = \begin{bmatrix} 2.\cos(2\pi f_p T_s) & 1 \\ -1 & 0 \end{bmatrix},$$ avec $f_p$ la fréquence de fonctionnement du tube à gaz pulsé et $T_s$ la période d'échantillonnage du signal $S_P$,

$C_{sin} = (1\ 0)$, et
$x_{sin}(k)$ est le vecteur d'état associé au signal sinusoïdal $S_P$ à l'instant k;
$x_{sin}(k+1)$ est le vecteur d'état associé au signal sinusoïdal $S_P$ à l'instant k+1.

En combinant les représentations d'état (#1) et (#2), on obtient alors une représentation d'état discrète du comportement du système thermique 100' dans son ensemble, prenant en compte la nature sinusoïdale du signal $S_P$ ramené à un flux de chaleur de perturbation sur l'entrée du système thermique 100', à savoir :

$$\begin{bmatrix} x(k+1) \\ x_{\sin}(k+1) \end{bmatrix} = \underbrace{\begin{bmatrix} A & B \cdot C_{\sin} \\ \underline{0} & A_{\sin} \end{bmatrix}}_{A_o} \cdot \underbrace{\begin{bmatrix} x(k) \\ x_{\sin}(k) \end{bmatrix}}_{x_o} + \underbrace{\begin{bmatrix} B \\ \underline{0} \end{bmatrix}}_{B_o} \cdot U(k)$$

$$T(k) = \underbrace{\begin{bmatrix} C & \underline{0} \end{bmatrix}}_{C_o} \cdot \begin{bmatrix} x(k) \\ x_{\sin}(k) \end{bmatrix}$$

(#3)

Les états du modèle thermique de l'équation (#3) sont estimés à l'aide d'un observateur d'états.

Pour éliminer l'écart entre les états $x_o$ du modèle thermique de l'équation (#3) et leurs équivalents physiques $x_p$, la différence entre la température mesurée par le capteur 101 et la température estimée par l'équation du modèle thermique (#3) est injectée par le vecteur de gain $L$ dans cette équation (#3), conduisant à l'équation matricielle de l'observateur (#4) ci-dessous :

$$\begin{cases} x_o(k+1) = A_0 \cdot x_0(k) + B_0 \cdot U(k) : prediction \\ T(k) = C_0 \cdot x_0(k) \\ erreur(k) = T(k) - T_{mesure}(k) \\ x_o(k+1) = x_o(k+1) + L * erreur(k) \\ x_o(k+1) = x_o(k+1)/(k) + L * (T_{mesure}(k) - C_0 \cdot x_0(k)) : correction\_prediction \\ x_o(k+1) = (A_o - LC_o) \cdot x_o(k) + B_o \cdot U(k) + L \cdot T(k) \end{cases}$$

Dans cette équation (#4), les coefficients des matrices $A_0$, $B_0$ et $C_0$ s'expriment à partir des coefficients des matrices A, B, et C ainsi que des matrices $A_{\sin}$ et $C_{\sin}$ qui ont été fournies précédemment. En ce qui concerne les matrices A, B et C, des exemples numériques sont fournis plus loin dans la description.

Par ailleurs, la température T est la température estimée par le modèle thermique et la température $T_{mesure}$ est la température fournie par le capteur 101.

Le vecteur de gain $L$ est une matrice colonne, car on a une seule température à réguler. Le vecteur de gain $L$ est déterminé par la méthode des « moindres carrés ».

Nous détaillons ci-après la méthode des « moindres carrées » susceptible d'être mise en oeuvre pour déterminer le vecteur de gain $L$.

La méthode des « moindres carrés » permet de minimiser l'erreur e(k), prise à l'instant k, entre les états $x_o(k)$ du modèle thermique et leurs équivalents physiques $x_p(k)$ à ce même instant k.

Cette erreur e(k) est donc un vecteur colonne s'exprimant sous la forme suivante :

$$e(k) = x_p(k) - x_o(k)$$

(#5)

L'évolution dans le temps de cette erreur e(k) peut être reliée au vecteur de gain $L$ sous la forme du système d'équations suivant :

$$e^T(k+1) = A_o{}^T e^T(k) - C_o{}^T v(k)$$

$$v(k) = -L^T e^T(k)$$

(#6)

dans lequel le symbole T mis en exposant correspond à la transposée de la matrice considérée.

Compte tenu du système d'équations (#6), le vecteur de gain est alors la solution optimale qui minimise le critère :

$$J = \sum_{n=1}^{\infty} [e^T(n) \cdot Q \cdot e(n) + v^T(n) \cdot R \cdot v(n)] \qquad (\#7)$$

où :

Q et R sont des matrices de pondération.

En utilisant le critère de l'équation (#7), il est possible de pondérer séparément l'erreur d'estimation pour les états $x_0$ du modèle thermique de l'équation (#3).

En ajustant les valeurs de la matrice de pondération Q, une plus grande importance est donnée aux erreurs liées aux états de la perturbation, associée au signal $S_P$. La matrice de pondération R permet quant à elle de limiter la norme du vecteur de gain L.

Le calcul du vecteur de gain L est effectué au moyen de la commande dlqr() implémentée dans le logiciel Matlab® de la manière suivante :

$$L^T = dlqr(A_o^T, C_o^T, Q, R) \qquad (\#8)$$

La commande dlqr permet de minimiser le critère de l'équation (#7). Cette commande met en oeuvre la résolution de l'équation matricielle dite de « Riccati » en temps discret, dont la solution est notée S.

L'équation matricielle de « Riccati » s'écrit alors dans ce cas :

$$A_o S A_o^T - S - (A_o S C_o^T) \cdot (C_o S C_o^T)^{-1} \cdot (C_o S A_o^T) + Q = 0 \qquad (\#9)$$

Une fois la solution de l'équation (#9) obtenue, on détermine la transposée du vecteur de gain $L^T$ de la façon suivante :

$$L^T = (C_o S C_o^T + R)^{-1} \cdot (C_o S A_o^T) \qquad (\#10)$$

Une fois le vecteur de gain ainsi obtenu, on peut alors l'injecter dans l'équation de l'observateur (#4). Il convient de noter que d'autres méthodes que celles des « moindres carrés » pourraient être employées pour déterminer le vecteur de gain L. Par exemple, on pourrait utiliser la méthode dite du « placement de pôle ».

Enfin, pour résoudre l'équation de l'observateur (#4), il faut exprimer le flux thermique W injecté dans le système thermique 100' en fonction du flux thermique équivalent $\Phi_{eq}$. Ce flux thermique équivalent $\Phi_{eq}$ est obtenu en récupérant l'état correspondant au sinus du vecteur d'état $x_0(k)$ de l'équation de l'observateur (#4).

$$\Phi_{eq} = [0 \ C_{sin}] . x_0(k) \qquad (\#11)$$

Physiquement, le lien entre le flux thermique W (signal $S_W$) à injecter dans la pince cryogénique 10 et le flux thermique équivalent $\Phi_{eq}$ (signal $S\Phi_{eq}$) peut s'effectuer de la façon suivante, cf. figure 2.

Pour les fréquences élevées, c'est-à-dire les fréquences typiquement supérieures à 0,01 Hz, le signal de flux thermique équivalent $S\Phi_{eq}$ permet de former le signal $S_W$, afin de compenser les variations périodiques de la température de la pince cryogénique 10.

C'est en particulier le cas à la fréquence de 1,4Hz. En effet, la fréquence de fonctionnement du tube à gaz pulsé est généralement de 1,4Hz. On retrouve donc cette fréquence dans le signal de perturbation $S_P$ et le signal de flux thermique équivalent $S\Phi_{eq}$, qui vise à compenser les effets de la perturbation.

L'actionneur 104 recevant le signal $S_W$ injecte alors, dans la pince 10, un flux thermique W qui est fonction de la période et de l'amplitude du signal de flux thermique équivalent $S\Phi_{eq}$.

Toutefois, ceci peut parfois poser des difficultés à basses fréquences, c'est-à-dire les fréquences typiquement inférieures à 0,01 Hz.

Pour cette raison, le dispositif 100 peut comprendre un moyen 103 pour assurer la régulation du système thermique 100' en basses fréquences afin de garantir le suivi de la consigne. Ce moyen 103 délivre un signal de commande $S_C$ spécifique, qui est amené à être modifié par le signal de flux thermique équivalent $S\Phi_{eq}$ afin de former le signal de commande de flux thermique $S_W$ arrivant effectivement sur l'actionneur 104.

Le signal $S_C$ est une représentation numérique du flux thermique à injecter dans la pince 10 pour assurer la régulation à ces basses fréquences. L'interaction entre les signaux $S_C$ et $S\Phi_{eq}$ ne pose pas de difficulté dans la mesure où le moyen 102 prend en compte les actions du moyen 103, par la présence du retour du signal $S_W$ vers l'entrée du moyen 102, cf. figure 2.

Le signal de commande $S_C$ peut être une valeur constante. Plus généralement, le signal $S_C$ peut être issu d'un régulateur, par exemple de type PID (pour Proportionnel Intégral Dérivé).

L'interaction des signaux $S_C$' et $S\Phi_{eq}$ commande ainsi la période et l'amplitude du signal $S_W$ de flux thermique parvenant à l'actionneur 104.

La présence du signal de commande $S_C$ permet ainsi d'améliorer encore la régulation de température de la pince cryogénique.

Cette variante est donc plus avantageuse, bien que la mise en oeuvre du signal de commande ne soit pas obligatoire.

Avantageusement, le signal de flux thermique équivalent $S\Phi_{eq}$ déterminé à l'étape (b) est injecté en opposition de phase. Dans ce cas et lorsque le signal de commande $S_C$ est prévu, on peut exprimer la relation entre $S_C$, $S_W$ et $S\Phi_{eq}$ sous la forme suivante : $S_W = S_C - S\Phi_{eq}$.

Cette expression est alors mise sous forme de matrices de flux discrétisées, dans l'équation matricielle de l'observateur (#4) pour en permettre la résolution.

Le fait d'injecter le signal de flux équivalent en opposition de phase permet de minimiser la puissance thermique requise pour l'actionneur 104. Il s'agit donc d'une solution préférentielle.

Encore plus préférentiellement, le fait d'injecter un flux de chaleur en opposition de phase au plus proche de la température à réguler permet de minimiser encore plus la puissance thermique devant être injectée dans la pince cryogénique 10 et donc, d'optimiser le dispositif de refroidissement 1.

A cet effet, il convient de disposer l'actionneur 104 au plus près de la pince cryogénique 10.

Par exemple, l'actionneur 104 pourra avantageusement être disposé à côté du capteur de température de la pince 10.

Le dispositif 100 et le système thermique 100' pourront être associés au dispositif de refroidissement 1 décrit précédemment, l'interface entre le dispositif 100 et la pince cryogénique 10 du laser s'effectuant par l'actionneur 104 pour injecter un flux thermique W dans l'élément 10 et le capteur de température 101.

L'actionneur 104 peut être un générateur de flux de chaleur capable de délivrer des puissances positive et négative (actionneur thermique). Par exemple, il peut s'agir d'une résistance électrique parcourue par un courant alternatif. Il peut également s'agir d'un actionneur émettant des ondes électromagnétiques dans le domaine infrarouge.

En variante, il peut s'agir d'un actionneur 104 comprenant un générateur de champ magnétique variable associé à un bain thermique isotherme, pour aimanter ou désaimanter adiabatiquement un dispositif raccordé à l'élément 10.

L'intérêt de cette désaimantation est de contrôler de manière active la température, avec des temps de réponse courts et surtout, sans perte d'énergie. En pratique, il s'agit de mettre un ou plusieurs matériau(x) à l'intérieur d'une bobine supraconductrice, dont les variations de courant sont commandées par le modèle thermique, pour la régulation de la température.

Contrairement à l'emploi d'un moyen de chauffage, cette solution évite toute propagation de chaleur fournie à l'élément et permet de s'affranchir d'éventuels problèmes de déphasage entre le flux thermique injecté dans l'élément et le signal de température $S_T$, problèmes qui peuvent être rencontrés avec un moyen de chauffage classique.

Le principe de la désaimantation adiabatique est rappelé ci-dessous.

Si l'on considère par exemple un élément tel que la pince cryogénique 10 du laser « MégaJoule » et le dispositif qui lui est raccordé, le matériau formant la pince est constitué d'une pluralité de moments magnétiques assimilables à autant d'aimants de la taille d'un atome ou d'une molécule. Comme des aimants, les moments magnétiques interagissent entre eux au sein du matériau.

Si l'on place la pince cryogénique 10 et le dispositif qui lui est raccordé dans un champ magnétique extérieur (au moyen d'un générateur de champ magnétique par exemple), les moments magnétiques du matériau s'alignent sur la direction et le sens du champ appliqué. Plus le champ est intense, plus il y a de moments magnétiques alignés. Le désordre est alors réduit et l'entropie diminue.

L'alignement des moments magnétiques est exothermique : c'est l'effet magnétocalorique.

Ceci permet d'ajouter ou de retirer un flux de chaleur du dispositif raccordé à la pince cryogénique et par suite, de la pince cryogénique 10 elle-même. C'est le principe de l'aimantation adiabatique.

En réduisant le champ magnétique, les moments magnétiques retournent à leur orientation aléatoire, ce qui demande de l'énergie. Les moments magnétiques puisent alors dans l'énergie thermique du matériau et la température du matériau baisse : c'est le principe de la désaimantation adiabatique.

Le contrôle du champ magnétique permet finalement de contrôler le flux de chaleur W injecté dans la pince cryogénique 10.

Il faut cependant noter que la présence d'un moyen 101 pour mesurer la température de la pince cryogénique 10 et celle d'un actionneur 104 pour injecter un flux thermique dans la pince cryogénique 10 peuvent impliquer un retard temporel des différents signaux se propageant dans le dispositif 100 et le système thermique 100'.

Ce retard temporel se traduit alors par un déphasage entre ces signaux, qui sont sinusoïdaux.

Par suite, le signal de commande de flux thermique $S_W$ arrivant à l'actionneur 104 présente une période et une amplitude adaptées pour compenser les variations périodiques de la température T de l'élément, mais une phase qui ne l'est pas. Il peut en résulter une inefficacité du procédé de régulation.

Comme cela sera montré à l'aide d'un exemple de réalisation décrit dans la suite de la description, un retard temporel faible peut être négligé dans le modèle thermique et donc dans le procédé conforme à l'invention. Un tel retard n'engendre en effet aucune instabilité du système de régulation.

Avantageusement, on prendra toutefois en compte ce retard temporel dans le modèle thermique. Pour la prise en compte de ce retard temporel dans le modèle thermique (équation de l'observateur #4), deux cas peuvent alors se présenter selon que le retard temporel généré par certains éléments du système thermique 100' est connu ou pas.

1er cas : le retard temporel est connu

Nous avons représenté sur la figure 3 le schéma de fonctionnement du procédé selon l'invention en présence d'un retard connu. Celui-ci est à comparer avec le schéma de la figure 2, pour lequel aucune prise en compte de ce retard n'est effectuée.

Comme cela peut être constaté en comparant les figures 2 et 3, le système 100' de la figure 3 comprend un moyen 105 représentatif du retard pur connu de l'ensemble des éléments constitutifs du système.

Le signal $S_W$ est ainsi retardé de r périodes d'échantillonnage, au niveau du moyen 105, pour former le signal $S^*_W$.

Le retard pur 105 n'est qu'une représentation du retard susceptible d'être généré par les différents éléments du système thermique 100', notamment l'actionneur 104 et le capteur 101 de température. Pour cette raison, le schéma de la figure 3 intègre ce retard pur au système thermique 100' à réguler. Il s'agit d'un artéfact pour modéliser le retard entre l'entrée et la sortie du système thermique 100'.

On comprend que le signal $S_W$ s'exprime en fonction du signal $S^*_{\Phi eq}$ issu du moyen 102 et, le cas échéant, du signal de commande $S_C$ comme cela a été expliqué précédemment.

On comprend également que le signal de flux thermique équivalent $S^*_{\Phi eq}$ issu du moyen 102 intègre également ce retard.

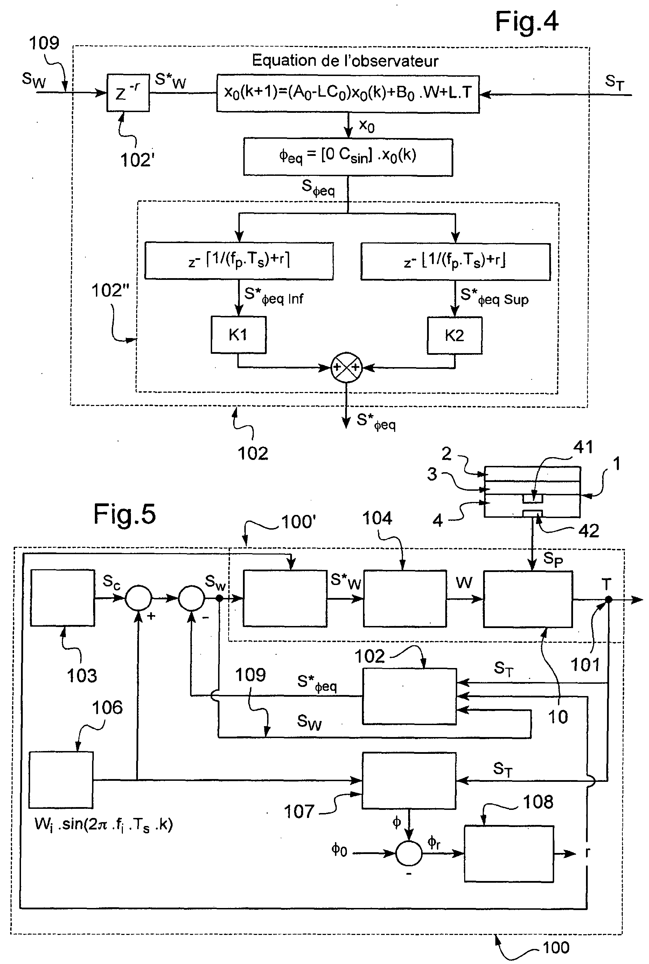

Pour cela, il convient d'opérer de la façon suivante, comme cela est représenté sur la figure 4.

Le moyen 102 comprend en entrée, le signal de commande de flux thermique $S_W$ et le signal de température $S_T$. Le signal $S_W$ est retardé de r périodes d'échantillonnage dans le moyen 102' afin de former le signal $S^*_W$ déphasé, ce dernier étant injecté dans l'équation de l'observateur (#4) et suivantes.

De la résolution de l'équation de l'observateur ressort le signal de flux thermique équivalent $S_{\Phi eq}$.

Le signal de flux thermique équivalent $S_{\Phi eq}$ est alors enregistré dans une mémoire tampon (« buffer » selon la terminologie anglo-saxonne ; non représentée) pour former deux signaux $S^*_{\Phi eqInf}$ et $S^*_{\Phi eqSup}$. On peut plus précisément exprimer les signaux $S^*_{\Phi equin}(k)$ et $S^*_{\Phi eqSup}(k)$ sous la forme :

$$S^*_{\Phi eqInf}(k) = S_{\Phi eq}\big(k - \lceil 1/(f_p.T_S) + r \rceil\big) \qquad \textbf{(#12)}$$

$$S^*_{\Phi eqSup}(k) = S_{\Phi eq}\big(k - \lfloor 1/(f_p.T_S) + r \rfloor\big) \qquad \textbf{(#13)}$$

où

$-\lceil 1/(f_p.T_s) + r \rceil$ caractérise le retard arrondi à l'entier inférieur du signal $S_{\Phi eq}$ par rapport au signal $S^*_{\Phi eqInf}$,

$\lfloor 1/(f_p.T_s) + r \rfloor$ caractérise le retard arrondi à l'entier supérieur du signal $S_{\Phi eq}$ par rapport au signal $S^*_{\Phi eqSup}$,

avec :

$\lceil \; \rceil$, l'opérateur mathématique correspondant à l'arrondi à l'entier inférieur.
$\lfloor \; \rfloor$, l'opérateur mathématique correspondant à l'arrondi à l'entier supérieur ;
r, le nombre de périodes d'échantillonnage dont on retarde le signal, lequel est connu.

Les deux signaux $S^*_{\Phi eqInf}$ et $S^*_{\Phi eqSup}$ permettent alors, grâce à une interpolation linéaire, de reconstituer la valeur approchée du signal $S^*_{\varnothing eq}$ retardé.

On s'affranchit ainsi de la limite de précision donnée par la période d'échantillonnage, ce qui permet de rejeter la perturbation périodique.

Finalement, on peut représenter le signal $S^*_{\Phi eq}(k)$ de la manière suivante :

$$S^*_{\phi eq}(k) = K1 * S^*_{\phi eqInf}(k) + K2 * S^*_{\phi eqSup}(k) \qquad (\#14)$$

Avec :

K2, le reste de la partie entière de $(1/f_p T_s) + r$

$$K1 = 1 - K2 \; ;$$

$f_p$, la fréquence du signal perturbation Sp, et
$T_s$, la période d'échantillonnage.

En sortie du moyen 102, on obtient un signal de flux thermique équivalent $S^*_{\Phi eq}$ déphasé et d'amplitude différente par rapport au signal de température $S_T$. Ceci s'effectue en deux sous-étapes qui sont associées à l'étape (b), à savoir une première sous-étape dans laquelle on reconstruit le signal $S_{\Phi eq}$ (Flux de chaleur) à partir de la mesure de température T de la pince cryogénique 10 et une deuxième sous-étape dans laquelle on retarde le signal ainsi reconstruit.

Au cours de l'étape (b), on retarde donc également le signal de flux thermique équivalent préalablement déterminé, par rapport à la phase du signal de température déterminé à l'étape (a).

2$^{éme}$ cas : le retard temporel n'est pas connu

Nous avons représenté sur la figure 5 le fonctionnement du procédé selon l'invention en présence d'un retard qui n'est pas connu. En particulier, le schéma représenté sur la figure 4 est à comparer avec les schémas représentés sur les figures 2 (non prise en compte du retard) et 3 (retard connu).

Dans ce cas où le retard lié aux différents éléments constitutifs du système thermique 100' n'est pas connu, celui-ci doit donc être estimé et pris en compte pour reconstruire le flux de chaleur équivalent $S^*_{\Phi eq}$.

Il existe plusieurs méthodes pour identifier un retard temporel dans des systèmes linéaires. On peut par exemple se référer au document « Survey and Comparison of Time-Delay Estimation Methods in Linear Systems », Svante Björklund, PhD thesis, 2003 qui présente certaines de ces méthodes.

Dans le cas d'espèce, une méthode dite approximative dans le domaine fréquentiel à été choisie.

Pour cela, on utilise un signal d'identification du déphasage généré par le système thermique. Ce signal d'identification est fourni par un moyen 106 adapté, tel qu'un générateur de fonctions, et présente une forme proche du signal représentatif du fonctionnement du cryoréfrigérateur, par exemple un tube à gaz pulsé, et donc du signal de perturbation. En l'occurrence, il s'agit donc d'un signal $S_{Wi}$ de flux thermique sinusoïdal s'exprimant sous la forme :

$$S_{Wi}(k) = W_i . \sin (2\pi . f_i . T_S . k) \qquad (\#15)$$

où:

$f_i$ est la fréquence du signal d'identification qui est proche de la fréquence de fonctionnement du tube à gaz pulsé,
$T_s$ est la période d'échantillonnage de ce signal, et
$W_i$ est l'amplitude du signal.

Le signal d'identification $S_{Wi}$ est injecté dans le système thermique 100', qui comprend des composants susceptibles de générer un retard, à savoir notamment la pince cryogénique 10, l'actionneur 104 et le capteur 101. En sortie de la pince cryogénique 10, à savoir à l'endroit où l'on mesure la température T de la pince 10 qu'on cherche à réguler, le signal d'identification est déphasé d'une phase $\phi$, par rapport au signal provenant du générateur de fonctions.

Le déphasage $\phi$ est déterminé dans le moyen 107, en effectuant par exemple une analyse spectrale.

Pour cela, le signal d'identification $S_{Wi}$ est injecté depuis le générateur de fonctions vers l'élément 107. En parallèle, le signal $S_T$, qui est récupéré en sortie de la pince 10, est transmis au moyen 107.

Pour déterminer ce déphasage $\phi$, le moyen 107 peut effectuer cette analyse spectrale au moyen d'un filtre numérique basé sur l'algorithme de Goertzel.

Cet algorithme est connu de l'homme du métier et on pourra obtenir plus d'informations à son sujet dans le document « Goertzel's algorithm », Douglas L. Jones, 2006.

La fonction de transfert H entre la sortie du filtre et l'entrée du filtre s'écrit sous la forme :

$$H(z) = \frac{1}{(1 - 2.\cos(2.\pi.f).z^{-1} + z^{-2})} \qquad (\#16)$$

où f est la fréquence que l'on souhaite extraire (analyse spectrale) et z la variable numérique du filtre.

Pour déterminer le déphasage phi = $\phi$; on calcule la fonction de transfert du filtre de Goertzel sur N échantillons. Puis, à partir des deux dernières valeurs du filtre (d1, d2), les parties imaginaire (« imag ») et réelle (« real ») sont calculées. On en déduit enfin la phase recherchée, en calculant l'arc tangente (« atan ») du rapport entre la partie imaginaire et la partie réelle. Le programme est le suivant :

```
realW = 2.0*cos(2.0*pi*k/N);
imagW = sin(2.0*pi*k/N);
d1 = 0.0;
d2 = 0.0;
for (n=0; n<N; ++n)
 {
  y = x(n) + realW*d1 - d2;
  d2 = d1;
  d1 = y;
 }
real = 0.5*realW*d1 - d2;
image = imagW*dl;
phi=atan(imag/real)
```

Il faut noter que d'autres algorithmes pourraient être utilisés afin de déterminer ce déphasage, tels que des algorithmes mettant à profit les transformées de Fourier (FFT).

On détermine par ailleurs le déphasage $\phi_0$ que devrait subir le signal d'identification $S_{Wi}$ provenant du générateur de fonctions 106 à partir du modèle thermique présenté à l'appui des relations (#1) à (#11) qui modélise le comportement du système thermique, en l'absence de toute prise en compte d'un retard. Ceci revient à mettre en oeuvre le modèle thermique en se basant sur le schéma de la figure 2.

En comparant le déphasage $\phi$ déterminé par analyse spectrale au déphasage $\phi_0$ déterminé par le modèle thermique présenté à l'appui des relations (#1) à (#11) en l'absence de tout retard, on en déduit que la différence $\phi_r = \phi - \phi_0$ est un déphasage lié effectivement au retard temporel généré par le système thermique 100'.

Il faut ensuite exprimer le déphasage $\varphi_r$ sous la forme d'un retard temporel. Ceci s'effectue en prenant au moins en compte la valeur de ce déphasage $\varphi_r$ et la fréquence $f_i$ du signal d'identification.

De préférence, on exprime ce retard temporel en un nombre de périodes d'échantillonnage, ce qui fait intervenir la période d'échantillonnage $T_S$ de ce signal. Dans ce cas, à ce déphasage $\varphi_r$ on peut associer un nombre $\bar{r}$ de périodes d'échantillonnage de retard, sous la forme :

$$\bar{r} = \frac{\varphi_r}{2\pi.f_i.T_S} \qquad (\#17)$$

Ce nombre de périodes d'échantillonnage est calculé dans le moyen 108.

La détermination du nombre $\bar{r}$ s'effectue en continu et peut présenter une certaine instabilité, du fait que le déphasage déterminé dans le moyen 107 avec l'algorithme de Goertzel n'est pas forcément stable.

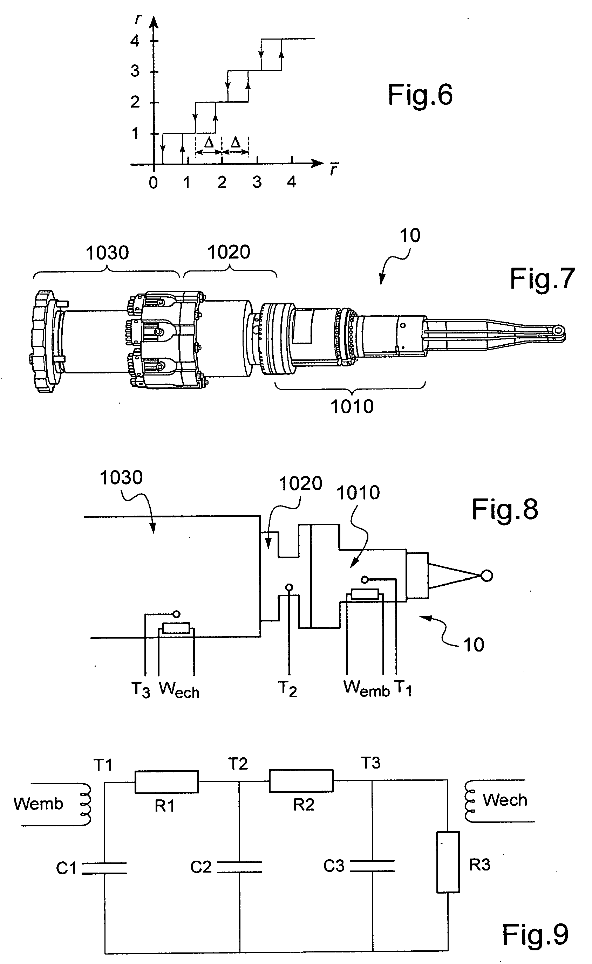

Pour remédier à cet éventuel inconvénient, le moyen 108 effectue avantageusement un filtrage non-linéaire du nombre $\bar{r}$. Un exemple de filtrage non-linéaire pouvant être mis en oeuvre est représenté sur la figure 6.

La figure 6 représente en abscisse, le nombre $\bar{r}$ obtenu avec l'équation (#17) et en ordonnée, le nombre r de périodes d'échantillonnage, une fois filtré. On observe que le filtre non-linéaire effectue une correction nommée $\Delta$.

Cette correction $\Delta$ est évaluée de la manière suivante.

On sait que le système thermique 100' est robuste à des variations de retard de deux périodes d'échantillonnage. On choisit alors une correction Δ égale à 1,5 période d'échantillonnage. Il s'agit d'un compromis entre la réaction du système thermique 100' et la robustesse. Avec cette approche, les valeurs erronées du retard temporel ne seront pas prises en compte.

Le nombre r de périodes d'échantillonnage représentatif du retard temporel ainsi estimé est exploité pour le calcul du flux de chaleur équivalent $S^*_{\Phi eq}$ dans le moyen 102.

A cet effet, on peut reprendre le descriptif qui a été réalisé précédemment à l'appui du schéma de la figure 4. Cependant, dans ce cas, le moyen 102 comprend en entrée, le signal de commande de flux thermique $S_W$, le signal de température $S_T$ associée à la température mesurée de la pince 10 et ce nombre r de périodes d'échantillonnage, estimé. Il suffit alors de modifier le schéma de la figure 4 en y ajoutant une entrée supplémentaire, connectée au moyen 102'.

Bien entendu, si aucun filtrage linéaire conforme à celui de la figure 6 n'est effectué, c'est le nombre $\bar{r}$ qui est injecté dans le moyen 102.

La figure 5 permet de préciser ce qui se passe dans le moyen 102.

On note que la méthodologie employée permet de revenir à une situation analogue à celle du schéma représenté sur la figure 3 (laquelle précise ce qui se passe dans le moyen de calcul 102), où le signal de flux de commande $S_W$ est retardé de r périodes d'échantillonnage avant d'être injecté dans l'équation de l'observateur.

Le nombre r de périodes d'échantillonnage est mis à profit pour retarder le signal $S_W$ dans le moyen 102', qui effectue un retard pur pour fournir le signal déphasé $S^*_W$. Ce dernier signal (équivalent au flux thermique W) est injecté dans l'équation de l'observateur.

Ainsi, en sortie du moyen 102, on obtient un signal de flux thermique équivalent $S^*_{\Phi eq}$ reconstruit déphasé qui peut être injecté en opposition de phase dans l'actionneur 104 et par suite, dans la pince 10.

Avantageusement, on forme plus précisément un signal $S_W = S_C - S^*_{\Phi eq}$ qui sera transmis au système thermique 100'.

Exemple d'application

Afin de mettre en évidence la pertinence de l'invention, une simulation numérique a été effectuée pour la pince du laser « MégaJoule ».

Cette pince est représentée sur la figure 7.

Par ailleurs, un retard temporel connu, lié au comportement dynamique des différents éléments constitutifs de la pince 10 est pris en considération.

Ce retard temporel intègre donc notamment les retards liés aux capteurs de température et aux actionneurs qui génèrent physiquement le flux thermique.

En effet, le modèle considère que trois capteurs de température T1, T2, T3 sont prévus respectivement sur l'échangeur 1030, l'enclume 1020 et l'embase 1010. Par ailleurs, il considère que deux actionneurs sont pris en compte, respectivement au niveau de l'embase 1010 ($W_{emb}$) et au niveau de l'échangeur 1030 ($W_{ech}$).

Une représentation montrant l'implantation des capteurs de température et des actionneurs est fournie sur la figure 8.

Les conditions choisies sont les suivantes.

Les coefficients de la matrice $C_{sin}$ sont connus.

Les coefficients de la matrice $A_{sin}$ sont déterminables à partir de la fréquence fp et de la période d'échantillonnage $T_S$. En l'occurrence, la fréquence de fonctionnement fp du tube à gaz pulsé 2 est de fp = 1,4Hz, le signal étant sinusoïdal (cela correspond à une période de l'ordre de 714ms) et la période d'échantillonnage vaut, pour cette simulation, $T_S = 80ms$.

Par ailleurs, le système d'équations (#1) s'établit en effectuant une analogie thermique-électrique sur les différents éléments de la pince 10, en considérant les trois capteurs de température et les deux actionneurs.

L'analogie thermique-électrique est bien connue de l'homme du métier. On rappelle cependant qu'une température peut être associée à un potentiel électrique, une capacité thermique (laquelle correspond au produit de la capacité thermique massique d'un objet considéré par sa masse) à une capacité électrique, un flux de chaleur à un courant électrique et une résistance thermique à une résistance électrique.

Le schéma électrique équivalent au schéma thermique de la figure 8, est représenté sur la figure 9. Sur cette figure 9, l'indice 1 correspond à l'embase 1010, l'indice 2 à l'enclume 1020 et l'indice 3 à l'échangeur 1030.

L'embase 1010 et l'enclume 1020 sont considérées comme étant réalisées en aluminium et l'échangeur est réalisé en cuivre. Par ailleurs, on considère que la masse de l'embase 1010 est de 218g, la masse de l'enclume 1020 de 143g et la masse de l'échangeur 1030 de 692g.

En fonction de la nature des matériaux, des hypothèses simplificatrices peuvent être mises en oeuvre.

Par ailleurs, il convient de prendre en compte l'aspect dynamique du filtrage actif opéré par l'invention, l'analogie thermique-électrique ne permettant pas à elle seule de définir les matrices A, B et C.

Ceci relève du savoir-faire du demandeur.

Cependant, aux fins de mise en oeuvre de l'invention, nous précisons numériquement, et pour le cas d'espèce, ces matrices :

$$A = \begin{bmatrix} 0{,}8187 & 0 & 0 & 0 \\ 0{,}0677 & 0{,}8714 & 0{,}1285 & 0 \\ 0{,}0008 & 0{,}0299 & 0{,}9670 & 0 \\ 0 & 0{,}1993 & 0 & 0{,}8007 \end{bmatrix}$$

$$B = \begin{bmatrix} 0{,}1813 \\ 0 \\ 0 \\ 0 \end{bmatrix}$$

$$C = \begin{bmatrix} 1 & 0 & 0 & 0 \end{bmatrix}$$

L'amplitude de la température T de la pince cryogénique 10 en l'absence de la régulation effectuée par le procédé selon l'invention est fixée à 5mK. Cette valeur est réaliste par rapport aux données expérimentales actuellement disponibles sur le dispositif représenté sur la figure 1 pour le laser « MégaJoule ». On comprend donc que l'amplitude de 5mK est celle qui est actuellement obtenue sur la pince du laser « MégaJoule » avec la mise en oeuvre du stabilisateur 3 et du circuit de refroidissement 4, mais sans la régulation effectuée par l'invention.

Le retard temporel $T_r$ lié aux différents éléments constitutifs du dispositif 100 est fixé à $T_r$ = 195ms.

Dans ce cas, on a K2 = 0,366 (fp= 1,4Hz ; $T_S$ = 80ms; r = $T_r/T_S$ = 2,4375) et K1 = 0,634.

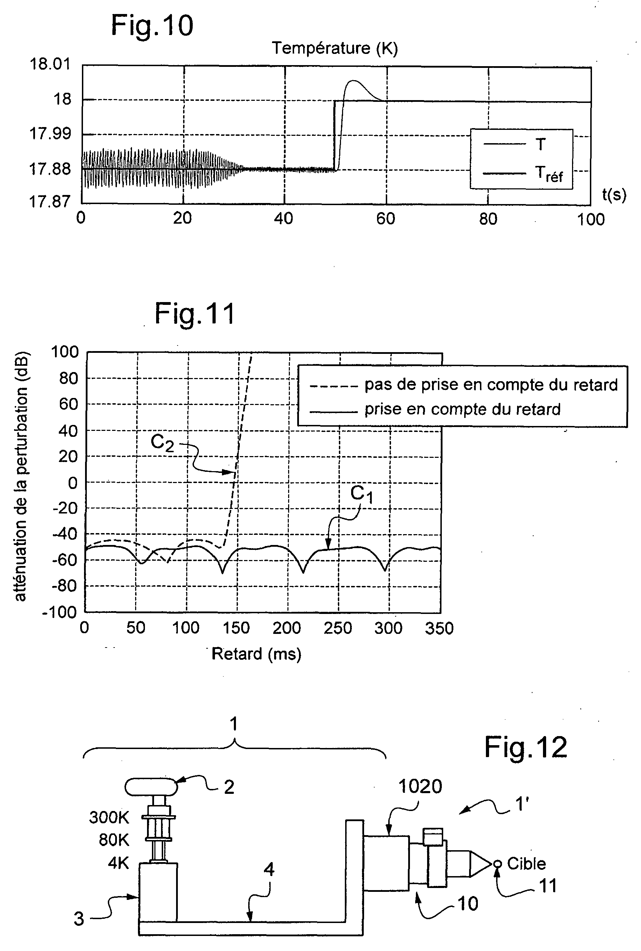

Les résultats obtenus sont représentés sur la figure 10.

La figure 10 montre l'évolution de la température T (en Kelvins) de la pince cryogénique 10 en fonction du temps t (en secondes).

Entre t = 0s et t = 25s, le filtrage selon l'invention n'est pas mis en oeuvre. On observe donc une variation périodique de cette température, dont l'amplitude vaut 5mK (amplitude crête à crête de 10mK) autour d'une valeur de référence de $T_{réf}$ = 17,98K.

Au temps t = 25s, le filtrage actif selon l'invention est mis en oeuvre. On observe alors que la variation de température diminue nettement, l'amplitude de la température T est de l'ordre du mK, autour de cette valeur de référence.

Puis, au temps t = 50s, on impose à la pince cryogénique 10 une augmentation de la température T de référence, celle-ci étant portée à $T_{réf}$ = 18K.

On observe alors que la variation de température T de la pince cryogénique 10 est de l'ordre du mK autour de cette autre valeur de référence, après un transitoire d'une dizaine de secondes.

Comme cela a été précisé précédemment, la mise en oeuvre d'un retard temporel dans le modèle thermique n'est pas obligatoire si celui-ci est « faible ».

C'est ce que montre la figure 11.

La figure 11 représente l'atténuation des variations de la température T de la pince cryogénique 10, en fonction du retard temporel effectivement généré.

Une première courbe C1 montre l'évolution de cette atténuation, en prenant en compte ce retard temporel, connu. Une deuxième courbe C2 montre l'évolution de cette atténuation en l'absence de prise en compte de ce retard temporel dans la régulation effectuée dans le cadre de l'invention.

On observe que l'atténuation est comparable à celle de la courbe C1 jusqu'à une valeur de retard temporel de 130ms. Au-delà, il devient nécessaire de prendre en compte le retard temporel dans le modèle thermique.

Avantageusement, on prendra donc en compte ce retard temporel dans le modèle thermique et donc dans le procédé selon l'invention, mais, dans certains cas, cette prise en compte peut être négligée.

Résultats d'un essai :

Afin de confirmer la pertinence de l'invention, un essai sur un système réel a été effectué. Ce système de test est similaire au système comportant la pince du laser « MégaJoule ».

Il est représenté sur la figure 12.

Contrairement à ce qui est représenté sur la figure 12, ce système de test ne dispose pas de l'embase 1010 destinée à porter la cible 11, et en conséquence il ne dispose pas de la cible 11 elle-même. Il ne dispose pas non plus de l'échangeur 1030, dans la mesure où le moyen 4 est un barreau qui a pour fonction de représenter le circuit de refroidissement de la figure 1. Toutefois, l'embase 1010 et la cible 11 qu'elle porte sont représentées sur la figure 12 pour indiquer au lecteur où elles sont destinées à être installées au sein du système.

Par ailleurs, le système est pourvu de deux tubes 2 à gaz pulsé.

Dans le cas présent, on cherche donc à réguler la température de l'enclume 1020, laquelle est munie d'un capteur de température. Un actionneur thermique (non représenté) est également prévu sur l'enclume 1020, à proximité du capteur de température.

Les conditions choisies sont les suivantes :

- les coefficients de la matrice $C_{sin}$ sont connus ;
- les coefficients de la matrice $A_{sin}$ sont déterminables à partir de la fréquence $f_p$ et de la période d'échantillonnage $T_S$. En l'occurrence, la fréquence de fonctionnement fp des tubes à gaz pulsé 2 est de fp = 1,412Hz, le signal étant sinusoïdal (cela correspond à une période de l'ordre de 708,2 ms). La période d'échantillonnage vaut, pour cet essai, $T_S$ = 40ms.

Tout comme dans l' « exemple d'application » présenté précédemment, une analogie thermique-électrique est effectuée, en prenant en compte les éléments suivants : stabilisateur 3, barreau 4 et l'enclume 1020.

Le stabilisateur 3, le barreau 4 et l'enclume 1020 sont tous réalisés en Cuivre. Le stabilisateur 3 présente une masse de 10,892kg, le barreau 4 de 5,92kg et l'enclume 1020 de 1,74kg.

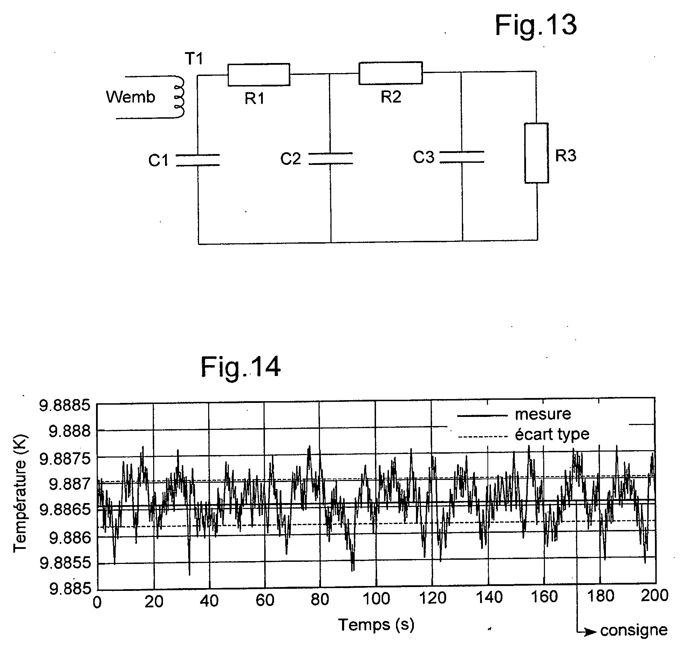

Le schéma électrique équivalent est fourni en figure 13. Sur cette figure 13, l'indice 1 correspond à l'enclume 1020, l'indice 2 au barreau 4 et l'indice 3 au stabilisateur 3.

Là encore, des hypothèses simplificatrices peuvent êtres prévues.

Par ailleurs, il convient de prendre en compte l'aspect dynamique du filtrage actif opéré par l'invention, l'analogie thermique-électrique ne permettant pas à elle seule de définir les matrices A, B et C.

Ceci relève du savoir-faire du demandeur.

Aux fins de mise en oeuvre de l'invention, les matrices A, B et C sont cependant fournies ci-dessous, dans le cas d'espèce :

$$A = \begin{bmatrix} -9.1560 & 9.1560 & 0 \\ 2.6911 & -4.8776 & 2.1865 \\ 0 & 1.1884 & -1.4601 \end{bmatrix}$$

$$B = \begin{bmatrix} 0.5951 \\ 0 \\ 0 \end{bmatrix}$$

$$C = \begin{bmatrix} 1 & 0 & 0 \end{bmatrix}$$

L'amplitude de la température T de la pince cryogénique 10 en l'absence de la régulation effectuée par le procédé selon l'invention est fixée à environs 10mK. On comprend donc que l'amplitude de 10mK est celle qui est actuellement obtenue sur la pince du laser « MégaJoule » avec la mise en oeuvre du stabilisateur 3 et du remplacement circuit de refroidissement à l'hélium 4 par un barreau de cuivre, mais sans la régulation effectuée par l'invention.

Le retard temporel $T_r$ lié aux différents éléments constitutifs du dispositif 100 est mesuré à environ $T_r$ = 45 ms. Ce retard est donc un retard connu.

Dans ce cas, on a K2 = 0,83 (fp= 1,412Hz; $T_S$ = 40ms; r = $T_r/T_S$ = 1,125) et K1 = 0,17.

Les résultats obtenus sont représentés sur la figure 14.

La figure 14 montre l'évolution de la température T (en Kelvins) de la pince cryogénique 10 en fonction du temps t (en secondes). Le régime étant déjà établi, on remarque que les oscillations rapides à 1,4 Hz sont pratiquement rejetées (< 1 mK), alors que sans régulation les oscillations à 1,4 Hz avaient pour amplitude 10 mK.

## Revendications

1.   Procédé de régulation de la température d'un élément (10) refroidi par un cryoréfrigérateur (2) à fonctionnement périodique, **caractérisé en ce qu'**il comprend les étapes suivantes :

(a) mesurer au moins l'évolution temporelle périodique de la température T de l'élément (10), cette évolution permettant d'obtenir un signal de température représentatif du fonctionnement périodique du cryoréfrigérateur (2) ;

(b) construire un signal de flux thermique périodique ($S_{\Phi eq}$, $S^{*}_{\Phi eq}$) dit équivalent, en fonction du signal de température obtenu à l'étape (a) ;

(c) construire un signal de commande de flux thermique ($S_W$), dépendant du signal de flux thermique équivalent construit à l'étape (b), ledit signal de commande de flux thermique ($S_W$) servant également, par retour, à la construction du signal de flux thermique équivalent ($S_{\Phi eq}$, $S^{*}_{\Phi eq}$) lors de l'étape (b);

(d) injecter un flux thermique (W) dans l'élément (10), sur la base du signal de flux thermique ($S_W$) construit à l'étape (c), pour compenser les variations périodiques mesurées de la température T de l'élément.

2. Procédé selon la revendication 1, dans lequel le signal de commande de flux thermique ($S_W$) dépend également d'un signal de commande ($S_C$) pour améliorer la compensation des variations périodiques de la température de l'élément aux basses fréquences.

3. Procédé selon la revendication précédente, dans lequel le flux thermique (W) injecté dans l'élément à l'étape (c) dépend de la différence entre le signal de commande ($S_C$) et le signal de flux thermique équivalent ($S_{\Phi eq}$, $S^{*}_{\Phi eq}$) construit à l'étape (b), pour limiter la puissance thermique injectée dans l'élément qui est nécessaire à la compensation des variations périodiques de sa température.

4. Procédé selon l'une des revendications précédentes, dans lequel l'étape (b) comprend également une étape additionnelle consistant à retarder le signal de flux thermique équivalent ($S_{\Phi eq}$) préalablement construit, par rapport à la phase du signal de température déterminé à l'étape (a).

5. Procédé selon la revendication précédente, dans lequel il est prévu une étape consistant à estimer la valeur de ce retard temporel.

6. Procédé selon la revendication précédente, dans lequel l'estimation de ce retard temporel comprend les étapes suivantes :

($b_1$) injecter un signal d'identification du retard temporel dans un système thermique (100') comprenant l'élément dont on cherche à réguler la température et un dispositif (100) de mise en oeuvre du procédé, ce signal d'identification présentant une forme et une fréquence proches du signal représentatif du fonctionnement du cryoréfrigérateur;

($b_2$) déterminer le déphasage $\phi$ du signal d'identification en sortie du système thermique, ce déphasage étant associé au retard temporel qu'on cherche à estimer ;

($b_3$) calculer le déphasage $\phi_0$ de ce signal d'identification avec un modèle représentant le comportement thermique du système thermique (100') en l'absence de tout retard;

($b_4$) calculer le déphasage $\varphi_r$ associé au retard temporel par la relation

$$\varphi_r = \phi - \phi_0;$$

($b_5$) estimer le retard temporel, au moins à partir du déphasage $\phi_r$ calculé à l'étape ($b_4$) et de la fréquence du signal d'identification, ledit retard étant utilisé pour retarder le signal de flux thermique équivalent.

7. Dispositif de mise en oeuvre du procédé de régulation de la température d'un élément (10) refroidi par un cryoréfrigérateur (2) à fonctionnement périodique selon l'une des revendications précédentes, **caractérisé en ce qu'**il comprend :

- au moins un moyen (101) pour mesurer l'évolution périodique de la température T de l'élément (10) liée au fonctionnement périodique du cryoréfrigérateur (2);

- au moins un moyen (102, 103, 106, 107, 108) pour déterminer le flux thermique équivalent ($S_{\Phi eq}$, $S^{*}_{\Phi eq}$) associé à cette variation périodique de la température T de l'élément (10), ce moyen ou cet ensemble de moyens comprenant un ordinateur ou un ensemble d'ordinateurs ou un processeur ou un ensemble de processeurs;

- au moins un moyen (104) pour injecter un flux thermique (W) dans l'élément (10), à partir d'un signal de commande de flux thermique ($S_W$) dépendant du signal de flux thermique équivalent ($S_{\Phi eq}$, $S^*_{\Phi eq}$) ;
- un moyen (109) pour injecter le signal de commande de flux thermique ($S_W$) au niveau de l'entrée dudit au moins un moyen (102) pour déterminer le flux thermique équivalent ($S_{\Phi eq}$, $S^*_{\Phi eq}$).

**8.** Dispositif selon la revendication précédente, dans lequel il est prévu un moyen (103) capable de délivrer un signal de commande ($S_C$) pour améliorer la compensation des variations périodiques de la température de l'élément aux basses fréquences.

**9.** Dispositif selon l'une des revendications 7 ou 8, dans lequel le moyen (104) pour injecter un flux thermique dans l'élément (10) comprend un générateur de champ magnétique variable associé à un bain thermique isotherme, pour aimanter ou désaimanter adiabatiquement un dispositif raccordé à l'élément (10).

**10.** Dispositif selon l'une des revendications 7 à 9, dans lequel ledit au moins un moyen (101) pour déterminer l'évolution périodique de la température de l'élément (10) et ledit au moins un moyen (104) pour injecter un flux thermique (W) dans l'élément (10) sont disposés l'un à côté de l'autre.

**11.** Installation cryogénique pour refroidir un élément (10) avec un cryoréfrigérateur à fonctionnement périodique (2), ladite installation comprenant un stabilisateur (3) relié au cryoréfrigérateur (2) et un circuit de refroidissement (4) comprenant un premier échangeur thermique (41) relié au stabilisateur (3) et un deuxième échangeur thermique (42) relié à l'élément (10), **caractérisé en ce qu'**il comprend, en outre, un dispositif selon l'une des revendications 7 à 10.

**Patentansprüche**

**1.** Verfahren zur Regelung der Temperatur eines durch einen Kryogefrierer (2) mit periodischem Betrieb gekühlten Elements (10), **dadurch gekennzeichnet, dass** es die folgenden Schritte umfasst:

(a) Messen mindestens der periodischen zeitlichen Entwicklung der Temperatur T des Elements (10), wobei diese Entwicklung erlaubt, ein Temperatursignal zu erhalten, das für den periodischen Betrieb des Kryogefrierers (2) repräsentativ ist,
(b) Bilden eines Signals des äquivalenten periodischen thermisches Flusses ($S_{\Phi eq}$, $S^*_{\Phi eq}$) in Abhängigkeit vom Temperatursignal aus Schritt (a),
(c) Bilden eines Steuersignals des thermischen Flusses ($S_W$), das vom Signal des äquivalenten thermischen Flusses aus Schritt (b) abhängt, wobei das Steuersignal des thermischen Flusses ($S_W$) ebenfalls, auf dem Rückweg, für die Bildung des Signals des äquivalenten thermischen Flusses ($S_{\Phi eq}$, $S^*_{\Phi eq}$) bei Schritt (b) dient,
(d) Einleiten eines thermischen Flusses (W) in das Element (10) auf der Basis des Signals des thermischen Flusses ($S_W$) aus Schritt (c), um die gemessenen periodischen Schwankungen der Temperatur T des Elements auszugleichen.

**2.** Verfahren nach Anspruch 1, wobei das Steuersignal des thermischen Flusses ($S_W$) ebenfalls von einem Steuersignal ($S_C$) abhängt, um den Ausgleich der periodischen Schwankungen der Temperatur des Elements in niedrigen Frequenzen zu verbessern.

**3.** Verfahren nach vorangehendem Anspruch, wobei der in das Element in Schritt (c) eingeleitete thermischen Fluss (W) von der Differenz zwischen dem Steuersignal ($S_C$) und dem Signal des äquivalenten thermischen Flusses ($S_{\Phi eq}$, $S^*_{\Phi eq}$) aus Schritt (b) abhängt, um die in das Element eingeleitete thermische Leistung zu begrenzen, die für den Ausgleich der periodischen Schwankungen seiner Temperatur notwendig ist.

**4.** Verfahren nach einem der vorangehenden Schritte, wobei der Schritt (b) ebenfalls einen zusätzlichen Schritt umfasst, der darin besteht, das zuvor gebildete Signal des äquivalenten thermischen Flusses ($S_{\Phi eq}$) in Bezug auf die Phase des in Schritt (a) bestimmten Temperatursignals zu verzögern.

**5.** Verfahren nach vorangehendem Anspruch, wobei ein Schritt vorgesehen ist, der darin besteht, den Wert dieser zeitlichen Verzögerung zu bestimmen.

**6.** Verfahren nach vorangehendem Anspruch, wobei die Bestimmung dieser zeitlichen Verzögerung die folgenden

Schritte umfasst:

(b$_1$) Einleiten eines Identifikationssignals der zeitlichen Verzögerung in ein thermisches System (100'), welches das Element umfasst, dessen Temperatur geregelt werden soll, und eine Vorrichtung (100) für die Umsetzung des Verfahrens, wobei dieses Identifikationssignal eine Form und eine Frequenz aufweist, die denen des für den Betrieb des Kryogefrierers repräsentativen Signals ähnlich sind,

(b$_2$) Bestimmen der Phasenverschiebung $\Phi$ des Identifikationssignals am Ausgang des thermischen Systems, wobei diese Phasenverschiebung der zeitlichen Verzögerung zugeordnet ist, die man bestimmen möchte,

(b$_3$) Berechnen der Phasenverschiebung $\Phi_0$ dieses Identifikationssignals mit einem Modell, welches das thermische Verhalten des thermischen Systems (100') bei Abwesenheit jedweder Verzögerung repräsentiert,

(b$_4$) Berechnen der der zeitlichen Verzögerung zugeordneten Phasenverschiebung $\varphi_\tau$ mit der Gleichung $\varphi_\tau = \Phi - \Phi_0$,

(b$_5$)Bestimmen der zeitlichen Verzögerung, mindestens ausgehend von der in Schritt (b$_4$) berechneten Phasenverschiebung $\varphi_\tau$ und der Frequenz des Identifikationssignals, wobei die Verzögerung verwendet wird, um das Signal des äquivalenten thermischen Flusses zu verzögern.

7. Vorrichtung für die Umsetzung des Verfahrens der Temperaturregelung eines durch einen Kryogefrierer (2) mit periodischem Betrieb gekühlten Elements (10) nach einem der vorangehenden Schritte, **dadurch gekennzeichnet, dass** sie umfasst:

- mindestens ein Mittel (101) zum Messen der periodischen Entwicklung der Temperatur T des Elements (10), die mit dem periodischen Betrieb des Kryogefrierers (2) verbunden ist,
- mindestens ein Mittel (102, 103, 106, 107, 108) zur Bestimmung des äquivalenten thermischen Flusses (S$_{\Phi eq}$, S*$_{\Phi eq}$), das dieser periodischen Schwankung der Temperatur T des Elements (10) zugeordnet ist, wobei dieses Mittel oder diese Mittelgruppe einen Rechner oder eine Rechnergruppe oder einen Prozessor oder eine Prozessorgruppe umfasst,
- mindestens ein Mittel (104), um einen thermischen Fluss (W) in das Element (10) ausgehend von einem Steuersignals des thermischen Flusses (S$_W$), das vom Signal des äquivalenten thermischen Flusses (S$_{\Phi eq}$, S*$_{\Phi eq}$) abhängt, einzuleiten,
- ein Mittel (109), um das Steuersignals des thermischen Flusses (S$_W$) im Bereich des Eingangs des mindestens einen Mittels (102) einzuleiten, um den äquivalenten thermischen Fluss (S$_{\Phi eq}$, S*$_{\Phi eq}$) zu bestimmen.

8. Vorrichtung nach vorangehendem Anspruch, wobei ein Mittel (103) vorgesehen ist, das imstande ist, ein Steuersignal (S$_C$) auszugeben, um den Ausgleich der periodischen Schwankungen der Temperatur des Elements in niedrigen Frequenzen zu verbessern.

9. Vorrichtung nach einem der Ansprüche 7 oder 8, wobei das Mittel (104) zum Einleiten eines thermischen Flusses in das Element (10) einen Generator eines variablen Magnetfelds umfasst, zugeordnet einem thermischen Isothermbad, um eine mit dem Element (10) verbundene Vorrichtung adiabatisch zu magnetisieren oder zu entmagnetisieren.

10. Vorrichtung nach einem der Ansprüche 7 bis 9, wobei das mindestens eine Mittel (101) zur Bestimmung der periodischen Entwicklung der Temperatur des Elements (10) und das mindestens eine Mittel (104) zur Einleitung eines thermischen Flusses (W) in das Element (10) nebeneinander angeordnet sind.

11. Kryoanlage zur Kühlung eines Elements (10) mit einem Kryogefrierer mit periodischen Betrieb (2), wobei die Anlage einen mit dem Kryogefrierer (2) verbundenen Stabilisator (3) und einen Kühlkreis (4) umfasst, der einen ersten, mit dem Stabilisator (3) verbundenen Wärmetauscher (41) und einen zweiten, mit dem Element (10) verbundenen Wärmetauscher (42) umfasst, **dadurch gekennzeichnet, dass** er ferner eine Vorrichtung nach einem der Ansprüche 7 bis 10 umfasst.

**Claims**

1. A method of regulating the temperature of an element (10) cooled by a cryorefrigerator (2) with periodic operation, the method being **characterized in that** it comprises the following steps:

a) measuring at least the periodic time variation of the temperature T of the element (10), this variation serving to obtain a temperature signal representative of the periodic operation of the cryorefrigerator (2);

b) constructing an "equivalent" periodic heat flux signal ($S_{\Phi eq}$, $S^*_{\Phi eq}$) as a function of the temperature signal obtained in step a);

c) constructing a heat flux control signal ($S_W$) depending on the equivalent heat flux signal constructed in step b), said heat flux control signal ($S_W$) also serving, by return, in the construction of the equivalent heat flux signal ($S_{\Phi eq}$, $S^*_{\Phi eq}$) during step b); and

d) injecting a heat flux (W) into the element (10) on the basis of the heat flux signal ($S_W$) constructed in step c), in order to compensate for the measured periodic variations in the temperature T of the element.

2. A method according to claim 1, wherein the heat flux control signal ($S_W$) also depends on a control signal ($S_C$) for improving the compensation of the periodic variations in the temperature of the element at low frequencies.

3. A method according to the preceding claim, wherein the heat flux (W) injected into the element in step c) depends on the difference between the control signal ($S_C$) and the equivalent heat flux signal ($S_{\Phi eq}$, $S^*_{\Phi eq}$) constructed in step b) in order to limit the heat power injected into the element that is needed for compensating periodic variations of its temperature.

4. A method according to any preceding claim, wherein step b) also comprises an additional step consisting in delaying the previously constructed equivalent heat flux signal ($S_{\Phi eq}$) relative to the phase of the temperature signal determined in step a).

5. A method according to the preceding claim, wherein a step is provided that consists in estimating the value of the time delay.

6. A method according to the preceding claim, wherein the estimation of the time delay comprises the following steps:

$b_1$) injecting an identification signal for identifying the time delay in a thermal system (100') comprising the element for which it is desired to regulate the temperature, and a device (100) for performing the method, the identification signal presenting a waveform and a frequency close to those of the signal representative of the operation of the cryorefrigerator;

$b_2$) determining the phase shift $\phi$ of the identification signal at the output from the thermal system, this phase shift being associated with the time delay that is to be estimated;

$b_3$) calculating the phase shift $\phi_0$ of this identification signal with a model representing the thermal behavior of the thermal system (100') in the absence of any delay;

$b_4$) calculating the phase shift $\varphi_r$ associated with the time delay using the following relationship:

$$\varphi_r \;=\; \phi \;-\; \phi_0$$

$b_5$) estimating the time delay at least on the basis of the phase shift $\varphi_r$ calculated in step $b_4$) and of the frequency of the identification signal, said delay being used for delaying the equivalent heat flux signal.

7. A device for performing the method according to any preceding claim for regulating the temperature of an element (10) cooled by a cryorefrigerator (2) with periodic operation, the device being **characterized in that** it comprises:

· at least means (101) for measuring the periodic variation in the temperature T of the element (10) associated with the periodic operation of the cryorefrigerator (2);

· at least means (102, 103, 106, 107, 108) for determining the equivalent heat flux ($S_{\Phi eq}$, $S^*_{\Phi eq}$) associated with said periodic variation of the temperature T of the element (10), these means or set of means comprising a computer or a set of computers or a processor or a set of processors;

· at least means (104) for injecting a heat flux (W) into the element (10) on the basis of a heat flux control signal ($S_W$) depending on the equivalent heat flux signal ($S_{\Phi eq}$, $S^*_{\Phi eq}$) ; and

· means (109) for injecting the heat flux control signal ($S_W$) to the input at least of said means (102) for determining the equivalent heat flux ($S_{\Phi eq}$, $S^*_{\Phi eq}$).

8. A device according to the preceding claim, wherein means (103) are provided that are capable of delivering a control signal ($S_C$) for improving the compensation of the periodic variations in the temperature of the element at low frequencies.

9. A device according to claim 7 or claim 8, wherein the means (104) for injecting a heat flux into the element (10) comprise a variable magnetic field generator associated with an isothermal heat bath for adiabatically magnetizing or demagnetizing a device connected to the element (10).

10. A device according to any one of claims 7 to 9, wherein said means (101) for determining the periodic variation of the temperature of the element (10) and said means (104) for injecting a heat flux (W) into the element (10) are arranged side by side.

11. A cryogenic installation for cooling an element (10) with a cryorefrigerator (2) with periodic operation, said installation including a stabilizer (3) connected to the cryorefrigerator (2) and a cooling circuit (4) having a first heat exchanger (41) connected to the stabilizer (3), and a second heat exchanger (42) connected to the element (10), the installation being **characterized in that** it further comprises a device according to any one of claims 7 to 10.

Fig.1
(ART ANTERIEUR)

Fig.2

Fig.3

21

# Fig.4

Equation de l'observateur

$S_W$ → $Z^{-r}$ → $S^*_W$ → $x_0(k+1)=(A_0-LC_0)x_0(k)+B_0 .W+L.T$ ← $S_T$

102'

$x_0$

$\phi_{eq} = [0\ C_{sin}] .x_0(k)$

$S_{\phi eq}$

$z^{-\lceil 1/(f_p.T_s)+r\rceil}$          $z^{-\lfloor 1/(f_p.T_s)+r\rfloor}$

102''

$S^*_{\phi eq\ Inf}$          $S^*_{\phi eq\ Sup}$

K1          K2

$S^*_{\phi eq}$

102

109

# Fig.5

$S_c$   $S_W$   $S^*_W$   W   $S_P$   T

103   106   109   102   107   108   100'   104   101   10   100

$W_i .sin(2\pi .f_i .T_s .k)$

$\phi_0$   $\phi_r$   $\phi$

2   3   4   41   42   1

Fig.6

Fig.7

Fig.8

T3  Wech          T2          Wemb T1

T1        R1        T2        R2        T3

Wemb

C1              C2              C3              R3

Wech

Fig.9

## Fig.10

Température (K)

t(s)

Legend:
— T
— T$_{réf}$

## Fig.11

atténuation de la perturbation (dB)

- - - - pas de prise en compte du retard
——— prise en compte du retard

C$_2$

C$_1$

Retard (ms)

## Fig.12

1

2

300K
80K
4K

3

4

1020

1'

10

Cible

11

# Fig.13

# Fig.14

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2011089768 A1
- US 5857342 A

- JP 2004076955 A

**Littérature non-brevet citée dans la description**

- High-Tc DC SQUID system cooled by pulse-tube cooler. **HE D. F. et al.** Physica C. North Holland Publishing, 01 Octobre 2003, vol. 392-396, 1416-1419

- **SVANTE BJÖRKLUND.** Survey and Comparison of Time-Delay Estimation Methods in Linear Systems. *PhD thesis,* 2003
- **DOUGLAS L. JONES.** *Goertzel's algorithm,* 2006